(19) **Europäisches Patentamt**
**European Patent Office**
**Office européen des brevets**

(11) **EP 1 658 518 B1**

(12) **EUROPEAN PATENT SPECIFICATION**

(45) Date of publication and mention
of the grant of the patent:
**16.01.2008 Bulletin 2008/03**

(51) Int Cl.:
**G02B 5/18** (2006.01)

(21) Application number: **04744740.4**

(22) Date of filing: **05.08.2004**

(86) International application number:
**PCT/IB2004/051394**

(87) International publication number:
**WO 2005/019882 (03.03.2005 Gazette 2005/09)**

(54) **DIFFRACTIVE OPTICAL STRUCTURE WITH A LIQUID INTERFACE**

BEUGENDE OPTISCHE STRUKTUR MIT EINER FLÜSSIGGRENZFLÄCHE

STRUCTURE OPTIQUE DIFFRACTIVE AVEC UNE INTERFACE LIQUIDE

(84) Designated Contracting States:
**AT BE BG CH CY CZ DE DK EE ES FI FR GB GR HU IE IT LI LU MC NL PL PT RO SE SI SK TR**

(30) Priority: **20.08.2003 EP 03102609**

(43) Date of publication of application:
**24.05.2006 Bulletin 2006/21**

(73) Proprietor: **Koninklijke Philips Electronics N.V.**
**5621 BA Eindhoven (NL)**

(72) Inventors:
• **HENDRIKS, Bernardus, H., W.**
**NL-5656 AA Eindhoven (NL)**

• **KUIPER, Stein**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**FR-A- 2 653 903**     **US-A1- 2001 050 815**
**US-B2- 6 330 110**

**Description**

FIELD OF THE INVENTION

The present invention relates to an optical system, particularly to an optical system comprising a diffraction element.

BACKGROUND OF THE INVENTION

Optical systems acting upon a given input radiation including a range of different wavelengths commonly introduce a chromatic aberration in the form of a variation of a focal length which is wavelength dependent. An example of such an optical system is an image capture device, for example a photographic camera for recording images using a radiation beam comprising different wavelengths in the visible range of the electromagnetic radiation spectrum.

The introduction of chromatic aberration into a radiation beam in such an optical system may commonly be caused by optical elements of the system. These optical elements, for example a lens, are formed of a material, for example polycarbonate, having a particular optical dispersion and a particular refractive index for a certain wavelength. Optical dispersion is a dependence of a refractive index of a material with a wavelength of given radiation. Therefore a first wavelength comprised within a given radiation is refracted by a first refractive angle according to a first refractive index of the polycarbonate. A radiation beam of a second different wavelength of the given radiation is refracted by a second, different, refractive angle according to a second different refractive index of the polycarbonate. An optical dispersion is commonly denoted by an Abbe Number ($V_d$). A relatively low value of Abbe Number represents a relatively high optical dispersion and vice versa. A relatively high optical dispersion corresponds to a relatively high variation in an angle of refraction with different wavelengths of a given radiation beam.

To compensate for a chromatic aberration caused by an optical dispersion, a refractive optical element and a diffractive optical element may be used together to act upon given radiation. Refractive and diffractive optical elements have optical dispersions with opposite signs to each other, and a refractive and a diffractive element, being correctly designed, may therefore be arranged to compensate for a chromatic aberration introduced by each other.

A diffractive optical element is generally designed to select one particular diffraction order for a given radiation beam. However, for a radiation beam comprising a range of different wavelengths, for example visible white light, the diffractive optical element may select different diffraction orders for the different wavelengths. This inefficiency of selecting one particular diffraction order causes a deterioration of an image quality of the photographic camera and is termed 'flare'.

US patent US6330110 describes a diffractive optical element comprising three or more layers. At an interface between adjacent layers, each layer being formed of a different material to an adjacent layer, there is a diffraction grating. By selecting the materials from which the different layers are formed and selecting a variation in a depth of each layer, the diffraction grating reduces the flare of a radiation beam comprising a range of different wavelengths by selecting predominantly a same diffraction order for each of the different wavelengths.

European patent application EP1193512 discloses a diffractive optical element comprising at least two diffraction gratings adjacent each other. Each diffraction grating is formed between two layers, each layer being of a different material and having a different optical dispersion. The diffractive optical element has a curvature and has a high selection efficiency for one particular diffraction order for each different wavelength of a given radiation beam.

Japanese patent application 127322/1997 describes a diffraction optical element which comprises a first and a second diffraction relief pattern. The first relief pattern is formed at an interface between an acrylic and a polycarbonate material. In one embodiment, the second relief pattern is formed at an interface between the polycarbonate material and air. A depth of channels of the first relief pattern is different to a depth of channels of the second relief pattern such that the diffraction optical element has a high selection efficiency for one particular diffraction order for each different wavelength of a given radiation beam.

The optical systems disclosed in US patent US6330110, European patent application EP1193512 and Japanese patent application 127322/1997 are each manufactured according to similar methods. In order for each of the optical systems to accurately perform the desired diffraction and select for one particular diffraction order, it is necessary to form and align elements of the optical systems, during a manufacture process, to a high level of precision. Achieving this high level of manufacturing precision, often to an accuracy of a few microns, is relatively time consuming and cost inefficient. This is especially the case in an optical system comprising several layers formed of different materials, each layer having at least one diffractive surface, for example in US patent US6330110.

It is an object of the present invention to provide improvements to optical systems which diffract a given radiation beam, especially to those for obtaining one particular diffraction order, and to methods of manufacturing such optical systems to a high level of precision in a cost effective manner.

## SUMMARY OF INVENTION

In accordance with a first aspect of the present invention there is provided an optical system comprising a diffraction element formed of a substantially rigid first material having a first refractive index, the diffraction element having:

a) a first plurality of grooves at a first interface of the diffractive element with a second material having a second refractive index; and
b) a second, different, plurality of grooves at a second, different, interface with a third material having a third refractive index,

wherein the first and second pluralities of grooves are aligned with respect to each other such that a combined diffractive effect is achieved,
characterized in that the first interface being located at one side of the rigid first material and the second interface being located on another side opposite to the one side of the rigid first material, wherein the third material is a liquid.
The second material may be a solid or, alternatively, a fluid. A fluid is a substance which has a shape which alters in response to any applied force. Fluids tend to flow towards and to conform to a shape of an enclosing surface of the fluid. Gases, vapours, liquids and mixtures of solids and liquids which are capable of flow are all examples of fluids.
According to a second aspect of the present invention, there is provided a method of manufacturing an optical system comprising a diffraction element formed of a substantially rigid first material having a first refractive index, the diffraction element, when manufactured, comprising:

a) a first plurality of grooves at a first diffraction interface with a second material having a second refractive index; and
b) a second plurality of grooves at a second diffraction interface with a third material having a third, different, refractive index,
the first interface being located at one side of the rigid first material and the second interface being located on another side opposite to the one side of the rigid first material,

wherein the first and second pluralities of grooves are aligned with respect to each other such that a combined diffractive effect is achieved,
the method comprising applying said second material to said first plurality of grooves,
characterised in that the method comprises applying said third material to said second plurality of grooves as a liquid.
Preferably the method of manufacturing comprises moulding of the diffraction element using injection moulding. Use of an injection moulding process allows precise alignment of the first and second pluralities of grooves of the diffraction element by the alignment provided by the interfitting of mould parts in the injection moulding apparatus. Hereby the diffraction element, when removed from the mould, includes grooves on both sides which are accurately aligned with respect to each other such that a combined diffractive effect is achievable. In preferred embodiments, the first and second pluralities of grooves are arranged in pairs to coincide with each other.
Preferably, the second material is applied as a fluid and the method of manufacturing the diffraction element comprises applying the second and the third materials to respectively the first and second plurality of grooves of the substantially rigid diffraction element. It is thus possible to manufacture the optical system to a high level of precision in a relatively simple, efficient and inexpensive fashion.
Further features and advantages of the invention will become apparent from the following description of preferred embodiments of the invention, given by way of example only, which is made with reference to the accompanying drawings.

## BRIEF DESCRIPTION OF THE DRAWINGS

Figure 1 is a schematic diagram of an optical system including a diffraction element according to an embodiment of the present invention.
Figure 2 shows graphically an efficiency of a diffraction performed by a plurality of grooves according to the prior art.
Figure 3 shows graphically an efficiency of a diffraction performed by two pluralities of grooves according to an embodiment of the present invention.
Figure 4 shows an enlarged graphical view of the efficiency of diffraction shown in figure 3.
Figure 5 shows a schematic diagram including the diffraction element according to a different embodiment of the present invention.
Figure 6 shows a schematic diagram including the diffraction element according to a further different embodiment of the present invention.

Figure 7 shows schematically an optical system comprising a diffraction element according to an embodiment of the present invention.

DETAILED DESCRIPTION OF THE INVENTION

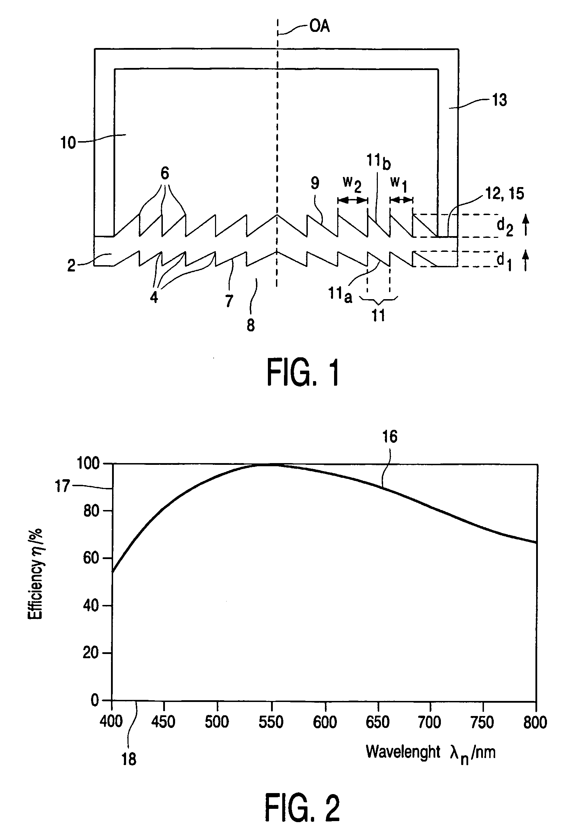

Figure 1 shows a diffraction element as part of an optical system in accordance with a first embodiment of the present invention. The optical system comprises a diffraction element 2 which is formed of a first material which is substantially rigid and in this example is Cyclic Olefinic Copolymer (COC). By substantially rigid it is meant that a shape of the first material is fixed.

The diffraction element 2 is circular and has a radius about an optical axis OA, the radius lying along a direction perpendicular the optical axis OA. The diffraction element 2 is shaped so as to have, on one side, a first plurality of grooves 4 and, on the other side, a second, different, plurality of grooves 6. The first plurality of grooves 4 lies at a first interface 7 of the diffraction element 2 with a second, different, material. In this embodiment the second material is a fluid and is a gas, the gas being air 8. The second plurality of grooves 6 lies at a second, different, interface 9 of the diffraction element 2 with a third, different, material. In this embodiment the third material is a liquid, for example water 10. Both the first and the second plurality of grooves 4, 6 are arranged concentrically about the optical axis OA. The first material has a first refractive index $n_1$, the second material has a second, different, refractive index $n_2$ and the third material has a third, different, refractive index $n_3$. Table 1 gives values of the first, second and third refractive indices $n_1$, $n_2$ and $n_3$ respectively at specified wavelengths $\lambda_n$ (450nm, 550nm 650nm) of a given radiation beam. Additionally the first, second and third materials, COC, air and water respectively, have a different optical dispersion indicated by a value of an Abbe Number ($V_d$).

Table 1

| Material | Refractive Index n at Wavelength $\lambda$ | | | Abbe No. |
| --- | --- | --- | --- | --- |
| | n(450nm) | n(550nm) | n(650nm) | ($V_d$) |
| COC | 1.5443 | 1.5357 | 1.53512 | 56 |
| Air | 1 | 1 | 1 | $\rightarrow \infty$ |
| Water | 1.3441 | 1.3359 | 1.3308 | 33 |

The diffraction element 2 is shaped to have an annular surface 12 located outside the outermost grooves of the first and second plurality of grooves 4, 6. An enclosure element 13 is shaped to have a complementary annular surface 15 which interfits with the annular surface 12 of the diffraction element 2 to form a fluid tight seal. The enclosure element 13 provides a fluid tight enclosure for the water 10, which fills the enclosure entirely. By being so filled, the second interface 9 with the diffraction element 2 and the water 10 is continuously maintained, irrespective of orientation of the system.

Each groove of the first plurality of grooves 4 has a first depth $d_1$ and each groove of the second plurality of grooves 6 has a second, different depth $d_2$. Both the first and the second depths $d_1$, $d_2$ lie along a direction parallel the optical axis OA and are different to each other. With reference to the arrangement shown in Figure 1, in this example the first and the second depths $d_1$, $d_2$ are each positive; the convention used is that the grooves are measured at opposite sides of the groove, and towards the central plane of the diffraction element 2. Note that one, or both of, the first and the second depths $d_1$, $d_2$ may in alternative embodiments be negative.

Each groove of the first and second plurality of grooves 4, 6 is in this embodiment blazed. Additionally, each groove of the first and second plurality of grooves 4, 6 has a width w in a direction perpendicular the optical axis OA. For each groove, for example a first groove 11a, of the first plurality of grooves 4, there is a coincident one groove, for example a second groove 11b, of the second plurality of grooves 6, forming one pair 11 of a plurality of pairs of coincident grooves. Each groove of one pair 11, in this example the first and the second groove 11a, 11b, of coincident grooves has substantially the same width, both widths being coincident with the other.

The width of pairs of coincident grooves varies along a radius lying perpendicular the optical axis OA. A pair of coincident grooves at a smaller radial distance along the radius from the optical axis OA has a first width $w_1$, and a different pair of coincident grooves at a greater distance from the optical axis OA has a second, different, width $w_2$. As a result of the pairs of grooves of the first plurality and the second plurality of grooves 4, 6 being aligned to be coincident, a combined diffractive effect is produced on a given radiation beam travelling along the optical axis OA. The given radiation beam comprises a plurality of different wavelengths $\lambda_n$. In this embodiment the given radiation beam comprises a range of wavelengths in the visible range of the electromagnetic spectrum of between approximately 400nm-800nm.

With the first plurality of grooves 4 having the first depth $d_1$ and the second plurality of grooves 6 having the second depth $d_2$, the variation of the widths w of pairs of coincident grooves along the radius from the optical axis OA, the specific refractive indices $n_1$, $n_2$ and $n_3$ of the first, second and third materials and the blazing of both the first and second plurality of grooves 4, 6, the diffraction element 2 is arranged to select a desired diffraction order m of the given radiation beam. The first and the second plurality of grooves 4, 6 are arranged to fulfill the following relation for a wavelength $\lambda_n$, in this example a design wavelength $\lambda_o$, of the given radiation beam:

$$-(n_1 - n_2)d_1 + (n_1 - n_3)d_2 = m\lambda_0 \qquad (1)$$

According to the prior art, relation (1) is solved for a design wavelength $\lambda_o$=550nm approximately with a selected diffraction order being a first diffraction order $m$=1. Selecting the second depth $d_2$=0 gives a first depth $d_1$= -1.027$\mu$m approximately. This first depth $d_1$, being negative, corresponds to a height of ridges of a plurality of ridges raised above a surface of the diffraction element, instead of a plurality of grooves.

A diffraction efficiency $\eta$ for the selection of the diffraction order $m$, in this case the first diffraction order $m$=1, is given using the following relation:

$$\eta = \left( \frac{\sin\left[ \dfrac{\pi(-(n_1 - n_2)d_1 + (n_1 - n_3)d_2)}{m\lambda_0} - \pi \right]}{\dfrac{\pi(-(n_1 - n_2)d_1 + (n_1 - n_3)d_2)}{m\lambda_0} - \pi} \right)^2 \qquad (2)$$

Figure 2 shows graphically, for the prior art, the diffraction efficiency $\eta$ for each different wavelength $\lambda_n$ of the given radiation beam. A first plot line 16 is plotted as a function of the efficiency $\eta$ on a first axis 17 against the wavelength $\lambda_n$ on a second axis 18, the second axis 18 being perpendicular the first axis 16.

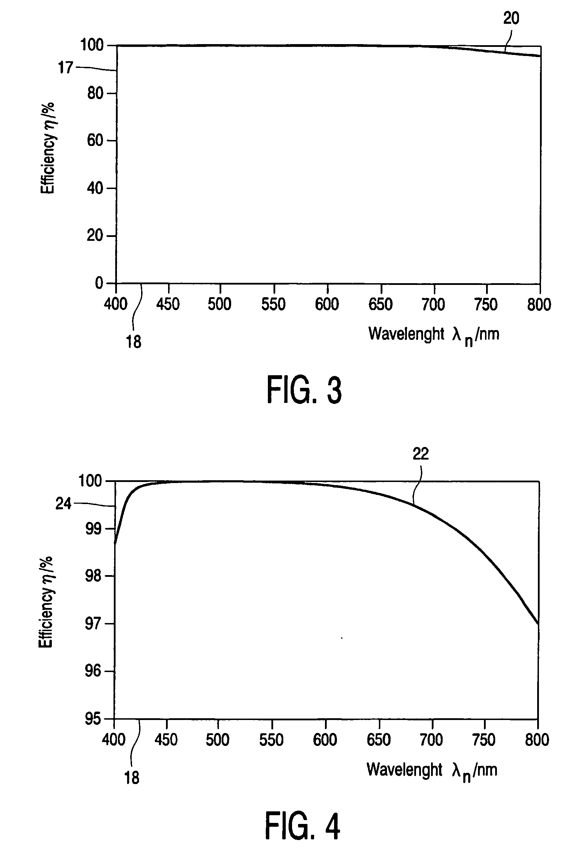

In an example of this invention, relation (1) is solved for the design wavelength $\lambda_0$=550nm approximately with a selected diffraction order being a first diffraction order $m$=1, a first depth $d_1$=13.431$\mu$m and a second depth $d_2$=38.763$\mu$m approximately. Figure 3 shows graphically for this second example the diffraction efficiency $\eta$ for each wavelength $\lambda_n$ of the given radiation beam. A second, different plot line 20 is plotted in a similar manner to the first plot line 16 on the first and second axis 17, 18.

Figure 4 shows graphically the diffraction efficiency $\eta$ for the second example as an enlarged view with a third, different, plot line 22 plotted as a function of the diffraction efficiency $\eta$ on a larger scale axis 24 of the first axis 17 against the wavelength $\lambda_n$ on the second axis 18. In this second example the diffraction efficiency $\eta$ of selecting the first diffraction order $m$=1 is substantially maximised for each of the wavelengths $\lambda_n$ of the given radiation beam. Substantially maximised in this example is where the diffraction efficiency $\eta$ has a value within the range of approximately 90%-100% and more preferably within the range of approximately 95%-100% for wavelengths $\lambda_n$ in the visible range of the electromagnetic spectrum of between approximately 400nm-800nm.

In a manufacturing process of the diffraction element 2, according to an embodiment of the present invention described, the first material of COC, initially as a fluid, is moulded to a desired form including the coincident first and second plurality of grooves 4, 6 and the annular surface 12. The moulding involves an injection moulding process whereby the first and second pluralities of grooves 4, 6 can be readily aligned, simply by alignment of moulding parts of injection moulding apparatus. Following the injection moulding process of the first material, the first material now being substantially rigid, the second material, air 8, is applied to the first plurality of grooves 4 and the third material, water 10, is applied to the second plurality of grooves 6 as a liquid.

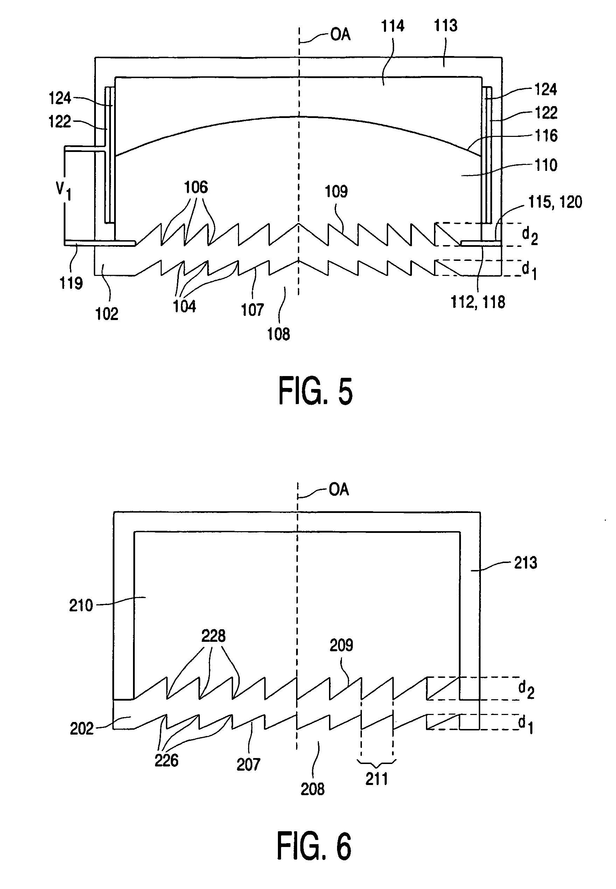

Figure 5 shows schematically a different embodiment of the present invention. Elements of this embodiment are similar to elements of a previously described embodiment. Similar reference numerals for these elements are used, incremented by 100 and corresponding earlier descriptions of features of these elements should be taken to apply here also.

The third material in this embodiment is salted water 110 and there is an additional fourth, different, material within the enclosure provided by the enclosure element 113. The enclosure element 113 is formed of a transparent material. The fourth material is, in one embodiment, an oil 114. The water 110 and the oil 114 are non-miscible and are separated by a fluid meniscus 116. The water 110 is electrically conducting and the oil 114 is electrically insulating and is for example a silicone oil or an alkane. The water 110 and the oil 114 are preferably arranged to have an equal density, so that a configuration of the fluid meniscus 116 is substantially independent of orientation, i.e. without dependence on gravitational effects between the water 110 and the oil 114. This may be achieved by appropriate selection of the oil 114; for example alkanes or silicone oils may be modified by addition of molecular constituents to increase their density to match that of the water 110.

In this embodiment a lower annular surface 118 of an annular first electrode 119, formed of a metallic material, arranged concentrically about the optical axis OA, lies in contact with the annular surface 112 of the diffraction element 102. Part of an upper annular surface 120 of the annular first electrode 119 lies in contact with the annular surface 115 of the enclosure element 113 and part of the upper annular surface 120 of the annular first electrode 119 lies in contact with the water 110.

The enclosure element 113 comprises a cylindrical second electrode 122, formed of a metallic material and arranged with a longitudinal axis coincident with the optical axis OA. A fluid contact layer 124 reduces a hysteresis in a contact angle of the fluid meniscus 116 with a cylindrical wall of the enclosure element 113. The fluid contact layer 124 is preferably formed from an amorphous fluorocarbon such as Teflon™ AF1600 produced by DuPont™. The AF1600 coating may be produced by successive dip coating of the second electrode 122, which forms a homogeneous layer of a substantially uniform thickness. European Patent Application no. 02075649, incorporated herein by way of reference, provides further details of systems using electrowetting forces to modify a configuration of a fluid meniscus.

When no voltage is applied across the first and second electrodes 119, 122 the fluid contact layer 124 has a higher wettability with respect to the water 110 than the oil 114. Due to electrowetting forces, the wettability by the water 110 varies under the application of a voltage $V_l$ across the first electrode 119 and the second electrode 122, which tends to change a contact angle of the fluid meniscus 116 at a three phase line (the line of contact between the fluid contact layer 124, the water 110 and the oil 114). A configuration of the fluid meniscus 116, separating the second and third materials, is thus modifiable in dependence on the applied voltage $V_l$. In this embodiment the configuration of the fluid meniscus has a rotationally symmetric curvature centred about the optical axis OA. By variation of the voltage V, applied across the first and the second electrode 119, 122, the rate of curvature of the fluid meniscus 116 varies accordingly. With no voltage applied across the first and the second electrodes 119, 122, the curvature of the fluid meniscus 116 is convex when viewed along the optical axis OA from the water 110.

The fluid meniscus 116, with a certain rate of curvature, functions as a lens on the given radiation beam, the given radiation beam already having been diffracted to the first diffractive order $m=1$ by the diffraction element 102. Variation of the rate of curvature of the fluid meniscus 116 varies the focal power of the lens.

Figure 6 shows schematically a further embodiment of the present invention in which electrowetting forces are not used to modify a configuration of fluid meniscus. Similarly, elements of this embodiment are similar to elements of previously described embodiments. Similar reference numerals for these elements are used, incremented by 200 and earlier descriptions of features of these elements should be taken to apply here also.

In this embodiment a first plurality of grooves 226 and a second plurality of grooves 228 are somewhat different to pluralities of grooves of previously described embodiments, in that the grooves are linear and arranged parallel each other along a direction perpendicular the optical axis OA. However, the first and second plurality of grooves 226, 228, similarly have a first depth $d_1$ and a different second depth $d_2$, are arranged coincidentally in pairs and are blazed, all of these features causing the diffraction element 202 to select a desired diffraction order m of a given radiation beam. A groove of the first plurality of grooves 226 and a groove of the second plurality of grooves 228 forming a pair 211 have substantially a same width as each other. The width of each groove of the first and second pluralities 226, 228 of grooves are substantially the same.

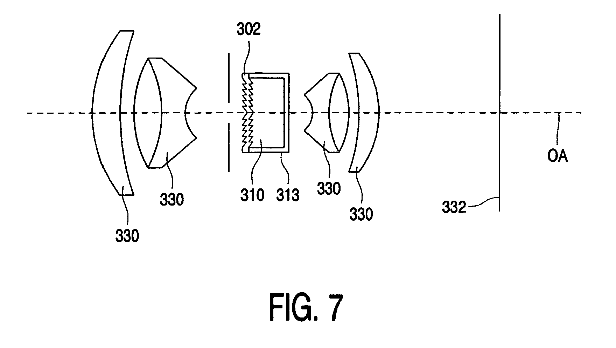

Figure 7 shows schematically an optical system comprising a diffraction element 302 of the present invention which is similar to the diffraction element of previous embodiments. Similarly to descriptions of the diffraction element of previous embodiments, an enclosure element 313 is arranged with the diffraction element 302 to provide a fluid tight enclosure to contain the water 310. The optical system is arranged, for example, for inclusion in an image capture device such as a photographic camera. The optical system comprises a plurality of lenses 330, each lens having at least one refractive surface. The lenses 330 and the diffraction element 302 arranged with the enclosure element 313 are aligned along an optical axis OA such that a given radiation beam comprising wavelengths corresponding to an image scene to be captured are focused onto an image recording element 332. The image recording element is for example a chemical based photographic film or a Charged Couple Device (CCD). Inclusion of the diffraction element 302 within the optical system allows a desired one particular diffraction order m of the wavelengths of the given radiation beam to be selected by the diffraction element 302 acting as a lens, and any flare of the radiation beam to be substantially eliminated.

The above embodiments are to be understood as illustrative examples of the present invention. Further embodiments are envisaged.

In further embodiments it is envisaged that the first, second and third materials are not restricted to being COC, air and water, respectively. Different materials which are substantially rigid may be used for the first material, as may different materials, including solids or alternative fluids such as a liquid, for the second material and different liquids for the third material. It is necessary for a refractive index and an optical dispersion of the first, second and third materials to be such that a desired diffraction order is selected for different wavelengths of a given radiation beam whilst substantially eliminating chromatic aberration.

Further, it is envisaged that depths, widths and a blazing of grooves may be different to the specific examples described earlier. Grooves of a plurality of grooves at an interface may all be of an equal width or, as described earlier, may have different widths to each other along a radius. Instead of being blazed, the grooves may be alternatively arranged to form a binary grating. Additionally in described embodiments, each plurality of grooves is arranged to substantially cover one side of the diffraction element. It is alternatively envisaged that each plurality of grooves is arranged to cover only a part of a side of the diffraction element.

The given radiation beam described comprises wavelengths of the visible range of the electromagnetic spectrum. It is further envisaged that the diffraction element of the present invention is arranged to select a substantially maximum efficiency of a particular diffraction order for other different wavelengths, for example those of the ultraviolet and the infra red radiation spectrum.

In a manufacturing process of the optical system including the diffraction element, the second material applied to the second plurality of grooves may be a liquid resin which is subsequently cured to solid form using ultraviolet radiation, rather than remaining a liquid.

As described, a configuration of the third material may be modified using electrowetting forces. The diffraction element within an optical system using electrowetting forces is not restricted to comprising grooves arranged concentrically about the optical axis. Linear grooves arranged parallel each other may alternatively be used.

In an embodiment of the present invention the optical system comprising the diffraction element is an image capture device, for example a photographic camera. It is envisaged that the diffraction element be included in further optical systems which act upon a radiation beam comprising a plurality of different wavelengths, generally of a large range of wavelengths, for example optical scanning devices employing data readout of a plurality of different optical discs , for example a Compact Disc (CD) or a Digital Versatile Disc (DVD). It is to be understood that any feature described in relation to any one embodiment may be used alone, or in combination with other features described, and may also be used in combination with one or more features of any other of the embodiments, or any combination of any other of the embodiments.

Furthermore, equivalents and modifications not described above may also be employed without departing from the scope of the invention, which is defined in the accompanying claims.

**Claims**

1. An optical system comprising a diffraction element (2; 102; 202; 302) formed of a substantially rigid first material having a first refractive index, the diffraction element having:

   a) a first plurality of grooves (4; 104; 226) at a first interface of the diffraction element with a second material (8; 108; 208) having a second refractive index; and
   b) a second, different, plurality of grooves (6; 106; 228) at a second, different, interface of the diffraction element with a third material (10; 110; 210) having a third refractive index,

   wherein the first and second pluralities of grooves are aligned with respect to each other such that a combined diffractive effect is achieved,
   **characterized in that** the first interface being located at one side of the rigid first material and the second interface being located on another side opposite to the one side of the rigid first material, wherein the third material (10; 110; 210) is a liquid.

2. An optical system according to claim 1, wherein said first plurality and said second plurality of grooves (4; 104; 226), (6; 106; 228) are blazed and arranged to select a desired diffraction order of a given input radiation.

3. An optical system according to claim 1 or 2, wherein said first plurality of grooves have a first depth ($d_1$), said second plurality of grooves have a second, different depth ($d_2$), and wherein said first and second depths are different to each other.

4. An optical system according to claim 3, wherein said grooves are arranged to fulfill the following relation:

$$-(n_1 - n_2)d_1 + (n_1 - n_3)d_2 = m\lambda_n$$

wherein, $n_1$, $n_2$ and $n_3$ are the first, second and third refractive indices respectively, $d_1$ and $d_2$ are the first and second depths respectively, $m$ is a desired diffraction order and $\lambda_n$ is a wavelength of the given input radiation.

**5.** An optical system according to claim 4, wherein the given radiation beam comprises a plurality of different wavelengths $\lambda_n$ and the grooves are arranged such that a diffraction efficiency $\eta$ is substantially maximized for each of said different wavelengths $\lambda_n$, the efficiency $\eta$ for each of said different wavelengths $\lambda_n$ of the given input different radiation beam being given using the following relation:

$$\eta = \left( \frac{\sin\left[ \dfrac{\pi\left( -(n_1 - n_2)d_1 + (n_1 - n_3)d_2 \right)}{m\lambda_n} - \pi \right]}{\dfrac{\pi\left( -(n_1 - n_2)d_1 + (n_1 - n_3)d_2 \right)}{m\lambda_n} - \pi} \right)^2$$

**6.** An optical system according to any preceding claim, wherein said first plurality and said second plurality of grooves (4; 104; 226), (6; 106; 228) are arranged concentrically about an optical axis (OA).

**7.** An optical system according to any preceding claim, wherein widths of said coinciding pairs are substantially the same, said widths being in a direction perpendicular the optical axis.

**8.** An optical system according to any preceding claim, wherein the second material has a given optical dispersion and the third material has a different optical dispersion.

**9.** An optical system according to any preceding claim, wherein said second material is a fluid.

**10.** An optical system according claim 9, wherein said second material is a gas (8; 108; 208).

**11.** An optical system according to any preceding claim, wherein said system is arranged to modify a configuration of said third material using electrowetting forces.

**12.** A method of manufacturing an optical system comprising a diffraction element (2; 102; 202; 302) formed of a substantially rigid first material having a first refractive index, the diffraction element, when manufactured, comprising:

a) a first plurality of grooves (4; 104; 226) at a first interface of the diffraction element with a second material (8; 108; 208) having a second refractive index; and
b) a second plurality of grooves (6; 106; 228) at a second interface of the diffraction element with a third material (10; 110; 210) having a third, different, refractive index,

the first interface being located at one side of the rigid first material and the second interface being located on another side opposite to the one side of the rigid first material,
wherein the first and second pluralities of grooves are aligned with respect to each other such that a combined diffractive effect is achieved,
the method comprising applying said second material to said first plurality of grooves,
**characterized in that** the method comprises applying said third material (10; 110; 210) to said second plurality of grooves as a liquid.

**Patentansprüche**

**1.** Optisches System, das ein Beugungselement (2; 102; 202; 302) umfasst, das aus einem im Wesentlichen starren Material mit einem ersten Brechungsindex gebildet wird, wobei das Beugungselement Folgendes aufweist:

a) eine erste Vielzahl von Rillen (4; 104; 226) an einer ersten Grenzfläche des Beugungselements zu einem zweiten Material (8; 108; 208) mit einem zweiten Brechungsindex, und
b) eine zweite, andersartige Vielzahl von Rillen (6; 106; 228) an einer zweiten, andersartigen Grenzfläche des Beugungselements zu einem dritten Material (10; 110; 210) mit einem dritten Brechungsindex,

wobei die erste und die zweite Vielzahl von Rillen in Bezug zueinander ausgerichtet sind, sodass eine kombinierte beugende Wirkung erreicht wird,
**dadurch gekennzeichnet, dass** die eine Grenzfläche an einer Seite des starren ersten Materials angeordnet ist und die zweite Grenzfläche an einer anderen, der einen Seite gegenüberliegenden Seite des starren ersten Materials angeordnet ist, wobei das dritte Material (10; 110; 210) eine Flüssigkeit ist.

2. Optisches System nach Anspruch 1, bei dem die erste Vielzahl und die zweite Vielzahl von Rillen (4; 104; 226), (6; 106; 228) geblazed und so eingerichtet sind, dass sie eine gewünschte Beugungsordnung einer gegebenen Eingangsstrahlung auswählen.

3. Optisches System nach Anspruch 1 oder 2, bei dem die erste Vielzahl von Rillen eine erste Tiefe ($d_1$) hat, die zweite Vielzahl von Rillen eine zweite, andersartige Tiefe ($d_2$) hat und bei dem die erste und die zweite Tiefe voneinander verschieden sind.

4. Optisches System nach Anspruch 3, bei dem die Rillen so eingerichtet sind, dass sie die folgende Beziehung erfüllen:

$$-(n_1 - n_2)d_1 + (n_1 - n_3)d_2 = m\lambda_n,$$

wobei $n_1$, $n_2$ und $n_3$ der erste, zweite bzw. dritte Brechungsindex sind und $d_1$ und $d_2$ die erste bzw. die zweite Tiefe sind, $m$ eine gewünschte Beugungsordnung ist und $\lambda_n$ eine Wellenlänge der gegebenen Eingangsstrahlung ist.

5. Optisches System nach Anspruch 4, bei dem das gegebene Strahlenbündel eine Vielzahl unterschiedlicher Wellenlängen $\lambda_n$ umfasst und die Rillen so eingerichtet sind, dass eine Beugungseffizienz $\eta$ für jede der unterschiedlichen Wellenlängen $\lambda_n$ im Wesentlichen maximiert wird, wobei die Effizienz $\eta$ für jede der unterschiedlichen Wellenlängen $\lambda_n$ des gegebenen Eingangsstrahlenbündels unter Verwendung der folgenden Beziehung angegeben wird:

$$\eta = \left( \frac{\sin\left[ \frac{\pi\left(-(n_1 - n_2)d_1 + (n_1 - n_3)d_2\right)}{m\lambda_n} - \pi \right]}{\frac{\pi\left(-(n_1 - n_2)d_1 + (n_1 - n_3)d_2\right)}{m\lambda_n} - \pi} \right)^2 .$$

6. Optisches System nach einem der vorhergehenden Ansprüche, bei dem die erste Vielzahl und die zweite Vielzahl von Rillen (4; 104; 226), (6; 106; 228) konzentrisch um eine optische Achse (OA) angeordnet sind.

7. Optisches System nach einem der vorhergehenden Ansprüche, bei dem Breiten der übereinstimmenden Paare im Wesentlichen gleich sind, wobei die Breiten in einer Richtung senkrecht zur optischen Achse verlaufen.

8. Optisches System nach einem der vorhergehenden Ansprüche, bei dem das zweite Material eine gegebene optische Dispersion und das dritte Material eine andersartige optische Dispersion aufweist.

9. Optisches System nach einem der vorhergehenden Ansprüche, bei dem das zweite Material ein Fluid ist.

10. Optisches System nach Anspruch 9, bei dem das zweite Material ein Gas (8; 108; 208) ist.

11. Optisches System nach einem der vorhergehenden Ansprüche, bei dem das System so eingerichtet ist, dass es eine Konfiguration des dritten Materials unter Verwendung von Elektrobenetzungskräften modifiziert.

12. Verfahren zur Herstellung eines optischen Systems, das ein Beugungselement (2; 102; 202; 302) umfasst, das aus einem im Wesentlichen starren ersten Material mit einem ersten Brechungsindex gebildet wird, wobei das Beugungselement bei der Herstellung Folgendes umfasst:

a) eine erste Vielzahl von Rillen (4; 104; 226) an einer ersten Grenzfläche des Beugungselements zu einem zweiten Material (8; 108; 208) mit einem zweiten Brechungsindex, und

b) eine zweite Vielzahl von Rillen (6; 106; 228) an einer zweiten Grenzfläche des Beugungselements zu einem dritten Material (10; 110; 210) mit einem dritten, andersartigen Brechungsindex,

wobei die erste Grenzfläche an einer Seite des starren ersten Materials angeordnet ist und die zweite Grenzfläche an einer anderen, der einen Seite gegenüberliegenden Seite des starren ersten Materials angeordnet ist,

wobei die erste und die zweite Vielzahl von Rillen in Bezug zueinander ausgerichtet sind, sodass eine kombinierte beugende Wirkung erreicht wird,

wobei das Verfahren das Aufbringen des zweiten Materials auf der ersten Vielzahl von Rillen umfasst,

**dadurch gekennzeichnet, dass** das Verfahren das Aufbringen des dritten Materials (10; 110; 210) auf die zweite Vielzahl von Rillen als Flüssigkeit umfasst.

## Revendications

1. Système optique comprenant un élément de diffraction (2; 102 ; 202 ; 302) formé d'un premier matériau substantiellement rigide ayant un premier indice de réfraction, l'élément de diffraction ayant :

   a) une première pluralité de rainures (4 ; 104 ; 226) à une première interface de l'élément de diffraction avec un second matériau (8 ; 108 ; 208) ayant un second indice de réfraction ; et

   b) une seconde pluralité de rainures (6 ; 106 ; 228), différente, à une seconde interface, différente, de l'élément de diffraction, avec un troisième matériau (10 ; 110 ; 210) ayant un troisième indice de réfraction,

   dans lequel les première et seconde pluralités de rainures sont alignées les unes par rapport aux autres de manière à ce qu'un effet diffractif combiné soit atteint,

   **caractérisé en ce que** la première interface étant située d'un côté du premier matériau rigide et la seconde interface étant située sur un autre coté opposé au premier côté du premier matériau rigide, dans lequel le troisième matériau (10 ; 110 ; 210) est un liquide.

2. Système optique selon la revendication 1, dans lequel ladite première pluralité et ladite seconde pluralité de rainures (4 ; 104 ; 226), (6 ; 106 ; 228) sont blazées et agencées pour sélectionner un ordre de diffraction souhaité d'une radiation donnée entrante.

3. Système optique selon la revendication 1 ou 2, dans lequel ladite première pluralité de rainures a une première profondeur $(d_1)$, ladite seconde pluralité de rainures a une seconde profondeur, différente, $(d_2)$, et dans lequel lesdites première et seconde profondeurs sont différentes l'une de l'autre.

4. Système optique selon la revendication 3, dans lequel lesdites rainures sont agencées pour satisfaire la relation suivante :

$$-(n_1 - n_2)d_1 + (n_1 - n_3)d_2 = m\lambda_n$$

   où $n_1$, $n_2$ et $n_3$ sont respectivement les premier, second et troisième indices de réfraction, $d_1$ et $d_2$ sont respectivement les première et seconde profondeurs, $m$ est l'ordre de réfraction souhaité et $\lambda_n$ est la longueur iid'onde de la radiation donnée entrante.

5. Système optique selon la revendication 4, dans lequel le faisceau de radiation donné comprend une pluralité de différentes longueurs d'onde $\lambda_n$ et tel que les rainures sont agencées de manière à ce qu'une efficacité de diffraction $\eta$ est substantiellement maximisée pour chacune desdites longueurs d'onde différentes $\lambda_n$, l'efficacité $\eta$ pour chacune desdites longueurs d'onde différentes $\lambda_n$ du faisceau de radiation donné entrant étant donnée en utilisant la relation suivante :

$$\eta = \left( \frac{\sin\left[ \dfrac{\pi\left(-(n_1 - n_2)d_1 + (n_1 - n_3)d_2\right)}{m\lambda_n} - \pi \right]}{\dfrac{\pi\left(-(n_1 - n_2)d_1 + (n_1 - n_3)d_2\right)}{m\lambda_n} - \pi} \right)^2$$

**6.** Système optique selon l'une quelconque des revendications précédentes, dans lequel ladite première pluralité et ladite seconde pluralité de rainures (4 ; 104 ; 226), (6 ; 106 ; 228) sont agencées concentriquement autour d'un axe optique (OA).

**7.** Système optique selon l'une quelconque des revendications précédentes, dans lequel les largeurs desdites paires coïncidentes sont substantiellement les mêmes, lesdites largeurs étant dans une direction perpendiculaire à l'axe optique.

**8.** Système optique selon l'une quelconque des revendications précédentes, dans lequel le second matériau a une dispersion optique donnée et le troisième matériau a une dispersion optique différente.

**9.** Système optique selon l'une quelconque des revendications précédentes, dans lequel ledit second matériau est un fluide.

**10.** Système optique selon la revendication 9, dans lequel ledit second matériau est un gaz (8; 108; 208).

**11.** Système optique selon l'une quelconque des revendications précédentes, dans lequel ledit système est agencé pour modifier une configuration dudit troisième matériau en utilisant des forces d'électromouillage.

**12.** Procédé de fabrication d'un système optique comprenant un élément de diffraction (2 ; 102 ; 202 ; 302) formé d'un premier élément substantiellement rigide ayant un premier indice de réfraction, l'élément de diffraction, lors de sa fabrication, comprend :

a) une première pluralité de rainures (4 ; 104 ; 226) à une première interface de l'élément de diffraction avec un second matériau (8 ; 108 ; 208) ayant un second indice de réfraction ; et
b) une seconde pluralité de rainures (6 ; 106 ; 228), à une seconde interface de l'élément de diffraction avec un troisième matériau (10 ; 110 ; 210) ayant un troisième indice de réfraction différent,

la première interface étant située d'un côté du premier matériau rigide et la seconde interface étant située d'un autre côté opposé au premier côté du premier matériau rigide,
dans lequel les première et seconde pluralités de rainures sont alignées les unes par rapport aux autres de manière à ce qu'un effet diffractif combiné soit atteint,
le procédé comprend l'application dudit second matériau à ladite première pluralité de rainures,
**caractérisé en ce que** le procédé comprend l'application dudit troisième matériau (10 ; 110 ; 210) à ladite seconde pluralité de rainures comme un liquide.

FIG. 1

FIG. 2

FIG. 3

FIG. 4

**FIG. 5**

**FIG. 6**

FIG. 7

**EP 1 658 518 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6330110 B
- EP 1193512 A
- JP 9127322 A
- EP 02075649 A